# EUROPEAN PATENT APPLICATION

(11) **EP 3 992 581 A1**
(43) Date of publication of application: **04.05.2022**
(21) Application number: 21204769.0
(22) Date of filing: 26.10.2021
(51) Int. Cl.: G01C 21/00, G06F 16/29, G08G 1/01, G09B 29/00

(54) **METHOD, APPARATUS, AND SYSTEM FOR ESTIMATING CONTINUOUS POPULATION DENSITY CHANGE IN URBAN AREAS**

(30) Priority: 30.10.2020 US 202017085899
(71) Applicant: HERE Global B.V., 5611 ZT Eindhoven (NL)
(72) Inventor: Koval, Dmitry, 10115 Berlin (DE); Beaurepaire, Jerome, 10715 Berlin (DE); Liu, Xiang, 10115 Berlin (DE); Pöthkow, Kai, 13347 Berlin (DE)
(74) Representative: Potter Clarkson

(57) **Abstract**

An approach is disclosed for estimating population density change where dynamic signals are not available or are not dense enough to be representative. The approach involves, for example, determining map features of a first map space. The approach also involves identifying partitions of the first map space based on the identified partitions (i) having features that are substantially similar, and (ii) having respective change functions that are substantially similar. The approach further involves determining an estimated change function based on one or more of the respective change functions that are substantially similar and that are associated with the first map space. The approach further involves using the estimated change function for at least one partition of a second map space based on the at least one partition of the second map space and at least one map partition of the first map space having map features that are substantially similar.

## Description

### BACKGROUND

Location-based service providers (e.g., mapping and navigation providers) are continually challenged to provide compelling services and applications. One area of development relates to population modeling (e.g., respective densities and changes over time). Census data is often used to determine the human population density and/or population change of a given area at a given time. For example, governmental agencies and/or businesses may rely on census data to allocate various resources (e.g., utilities, housing, shopping centers, etc.). However, census data is often static and/or has a low temporal granularity (e.g., collected every 10 years). Consequently, the population models based on census data can become quickly outdated and/or inaccurate (i.e., stale). Accordingly, service providers face significant technical challenges to generate dynamic population models for areas where only static map data is available.

### SOME EXAMPLE EMBODIMENTS

Therefore, there is a need for an approach for generating dynamic human population models for areas where only static map data is available.

According to one embodiment, a method comprises determining, by one or more processors, one or more map features of a first map space. The method also comprises identifying, by the one or more processors, two or more map partitions of the first map space based on the identified two or more map partitions (i) having map features that are substantially similar to one another in accordance with one or more unique combinations of the one or more determined map features, and (ii) having respective change functions that are substantially similar to one another, wherein a given change function represents a change of human population as a function of time in a given time-period and in association with a given map partition. The method further comprises determining, by the one or more processors, an estimated change function based at least on one or more of the respective change functions that are substantially similar to one another and that are associated with the first map space. The method further comprises providing or using, by the one or more processors, the estimated change function for at least one partition of a second map space based on the at least one partition of the second map space and at least one of the map partitions of the first map space having one or more map features that are substantially similar to one another.

According to another embodiment, an apparatus comprises at least one processor, and at least one memory including computer program code for one or more computer programs, the at least one memory and the computer program code configured to, with the at least one processor, cause, at least in part, the apparatus to determine, by one or more processors, one or more map features of a first map space. The apparatus is also caused to identify, by the one or more processors, two or more map partitions of the first map space based on the identified two or more map partitions (i) having map features that are substantially similar to one another in accordance with one or more unique combinations of the one or more determined map features, and (ii) having respective change functions that are substantially similar to one another, wherein a given change function represents a change of human population as a function of time in a given time-period and in association with a given map partition. The apparatus is further caused to determine, by the one or more processors, an estimated change function based at least on one or more of the respective change functions that are substantially similar to one another and that are associated with the first map space. The apparatus is further caused to provide or use, by the one or more processors, the estimated change function for at least one partition of a second map space based on the at least one partition of the second map space and at least one of the map partitions of the first map space having one or more map features that are substantially similar to one another.

According to another embodiment, a non-transitory computer-readable storage medium having stored thereon one or more program instructions which, when executed by one or more processors, cause, at least in part, an apparatus to determine, by one or more processors, one or more map features of a first functional urban area. The apparatus is also caused to identify, by the one or more processors, two or more map partitions of the first functional urban area based on the identified two or more map partitions (i) having map features that are substantially similar to one another in accordance with one or more unique combinations of the one or more determined map features, and (ii) having respective change functions that are substantially similar to one another, wherein a given change function represents a change of human population as a function of time in a given time-period and in association with a given map partition. The apparatus is further caused to determine, by the one or more processors, an estimated change function based at least on one or more of the respective change functions that are substantially similar to one another and that are associated with the first functional urban area. The apparatus is further caused to provide or use, by the one or more processors, the estimated change function for at least one partition of a second functional urban area based on the at least one partition of the second functional urban area and at least one of the map partitions of the first functional urban area having one or more map features that are substantially similar to one another.

According to another embodiment, an apparatus comprises means for determining, by one or more processors, one or more map features of a first map space. The apparatus also comprises means for identifying, by the one or more processors, two or more map partitions of the first map space based on the identified two or more map partitions (i) having map features that are substantially similar to one another in accordance with one or more unique combinations of the one or more determined map features, and (ii) having respective change functions that are substantially similar to one another, wherein a given change function represents a change of human population as a function of time in a given time-period and in association with a given map partition. The apparatus further comprises means for determining, by the one or more processors, an estimated change function based at least on one or more of the respective change functions that are substantially similar to one another and that are associated with the first map space. The apparatus further comprises means for providing or using, by the one or more processors, the estimated change function for at least one partition of a second map space based on the at least one partition of the second map space and at least one of the map partitions of the first map space having one or more map features that are substantially similar to one another.

The following numbered paragraphs are also disclosed:
1. A method comprising:
   determining, by one or more processors, one or more map features of a first map space;
   identifying, by the one or more processors, two or more map partitions of the first map space based on the identified two or more map partitions (i) having map features that are substantially similar to one another in accordance with one or more unique combinations of the one or more determined map features, and (ii) having respective change functions that are substantially similar to one another, wherein a given change function represents a change of human population as a function of time in a given time-period and in association with a given map partition;
   determining, by the one or more processors, an estimated change function based at least on one or more of the respective change functions that are substantially similar to one another and that are associated with the first map space; and
   providing or using, by the one or more processors, the estimated change function for at least one partition of a second map space based on the at least one partition of the second map space and at least one of the map partitions of the first map space having one or more map features that are substantially similar to one another.
2. The method of paragraph 1, further comprising:
   determining, by one or more processors, the given change function for each map partition of the first map space based on one or more temporal resolutions,
   wherein the estimated change function is further based on the one or more temporal resolutions.
3. The method of paragraph 1, further comprising:
   determining, by one or more processors, dynamic population data for each map partition of the first map space,
   wherein the given change function, the change of human population, or a combination thereof is based on the dynamic population data.
4. The method of paragraph 3, wherein the dynamic population data comprises dynamic signal data, cellular data, global positioning system data, or a combination thereof.
5. The method of paragraph 3, further comprising:
   training, by one or more processors, a classifier model, a regressor model, or a combination thereof for each map partition of the first map space based on the dynamic population data,
   wherein the given change function of each map partition is further based on the trained classifier model, the trained regressor model, or a combination thereof.
6. The method of paragraph 1, wherein the identifying, by the one or more processors, of the two or more map partitions comprises an iterative process, and wherein each iteration comprises a unique partitioning scheme.
7. The method of paragraph 6, wherein the iterative process seeks to maximize a number of the map features that are substantially similar and a number of the respective change functions that are substantially similar among the identified two or more map partitions.
8. The method of paragraph 6, wherein the unique partitioning scheme is based on a grid scheme, a building block scheme, a building footprint scheme, or a combination thereof.
9. The method of paragraph 1, wherein the one or more map features comprise a structural description of an area based on one or more map attributes.
10. The method of paragraph 1, wherein the one or more map attributes comprise functional classes of streets, building footprints, number of floors, types of points of interest, clusters of points of interest, or a combination thereof.
11. The method of paragraph 1, wherein the first map space comprises an area with a threshold population density, an urban area, or a combination thereof.
12. An apparatus comprising:
   at least one processor; and
   at least one memory including computer program code for one or more programs,
   the at least one memory and the computer program code configured to, with the at least one processor, cause the apparatus to perform at least the following operations:
      determine, by one or more processors, one or more map features of a first map space;
      identify, by the one or more processors, two or more map partitions of the first map space based on the identified two or more map partitions (i) having map features that are substantially similar to one another in accordance with one or more unique combinations of the one or more determined map features, and (ii) having respective change functions that are substantially similar to one another, wherein a given change function represents a change of human population as a function of time in a given time-period and in association with a given map partition;
      determine, by the one or more processors, an estimated change function based at least on one or more of the respective change functions that are substantially similar to one another and that are associated with the first map space; and
      provide or use, by the one or more processors, the estimated change function for at least one partition of a second map space based on the at least one partition of the second map space and at least one of the map partitions of the first map space having one or more map features that are substantially similar to one another.
13. The apparatus of paragraph 12, wherein the apparatus is further caused to: determine, by one or more processors, the given change function for each map partition of the first map space based on one or more temporal resolutions,
   wherein the estimated change function is further based on the one or more temporal resolutions.
14. The apparatus of paragraph 12, wherein the apparatus is further caused to:
   determine, by one or more processors, dynamic population data for each map partition of the first map space,
   wherein the given change function, the change of human population, or a combination thereof is based on the dynamic population data.
15. The apparatus of paragraph 14, wherein the dynamic population data comprises dynamic signal data, cellular data, global positioning system data, or a combination thereof.
16. The apparatus of paragraph 14, wherein the apparatus is further caused to:
   train, by one or more processors, a classifier model, a regressor model, or a combination thereof for each map partition of the first map space based on the dynamic population data,
   wherein the given change function of each map partition is further based on the trained classifier model, the trained regressor model, or a combination thereof.
17. The apparatus of paragraph 12, wherein the identifying, by the one or more processors, of the two or more map partitions comprises an iterative process, and wherein each iteration comprises a unique partitioning scheme.
18. A non-transitory computer-readable storage medium having stored thereon one or more program instructions which, when executed by one or more processors, cause an apparatus to at least perform the following operations:
   determining, by one or more processors, one or more map features of a first functional urban area;
   identifying, by the one or more processors, two or more map partitions of the first functional urban area based on the identified two or more map partitions (i) having map features that are substantially similar to one another in accordance with one or more unique combinations of the one or more determined map features, and (ii) having respective change functions that are substantially similar to one another, wherein a given change function represents a change of human population as a function of time in a given time-period and in association with a given map partition;
   determining, by the one or more processors, an estimated change function based at least on one or more of the respective change functions that are substantially similar to one another and that are associated with the first functional urban area; and
   providing or using, by the one or more processors, the estimated change function for at least one partition of a second functional urban area based on the at least one partition of the second functional urban area and at least one of the map partitions of the first functional urban area having one or more map features that are substantially similar to one another.
19. The non-transitory computer-readable storage medium of paragraph 18, wherein the apparatus is further caused to perform:
   determining, by one or more processors, the given change function for each map partition of the first functional urban area based on one or more temporal resolutions,
   wherein the estimated change function is further based on the one or more temporal resolutions.
20. The non-transitory computer-readable storage medium of paragraph 18, wherein the apparatus is further caused to perform:
   determining, by one or more processors, dynamic population data for each map partition of the first functional urban area,
   wherein the given change function, the change of human population, or a combination thereof is based on the dynamic population data.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of estimating population density change over time in an area where dynamic signals are either not available or dense enough to be representative, according to example embodiment(s);
FIG. 2 is an illustrative example of a data spectrum between relatively low accuracy data and relatively high accuracy data related to describing human movement, according to example embodiment(s);
FIG. 3 is a diagram of the components of a mapping platform, according to example embodiment(s);
FIG. 4 is a flowchart of a process for estimating population density change over time in an area where dynamic signals are either not available or dense enough to be representative, according to example embodiment(s);
FIGs. 5A through 5E are diagrams of example user interfaces for estimating population density change over time in an area where dynamic signals are either not available or dense enough to be representative, according to example embodiment(s);
FIG. 6 is a diagram of a geographic database, according to example embodiment(s);
FIG. 7 is a diagram of hardware that can be used to implement example embodiment(s);
FIG. 8 is a diagram of a chip set that can be used to implement example embodiment(s); and
FIG. 9 is a diagram of a mobile terminal (e.g., handset or vehicle or part thereof) that can be used to implement example embodiment(s).

### DESCRIPTION OF SOME EMBODIMENTS

Examples of a method, apparatus, and computer program for estimating population density change over time in an area where dynamic signals are either not available or dense enough to be representative are disclosed. In the following description, for the purposes of explanation, numerous specific details are set forth to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form to avoid unnecessarily obscuring the embodiments of the invention.

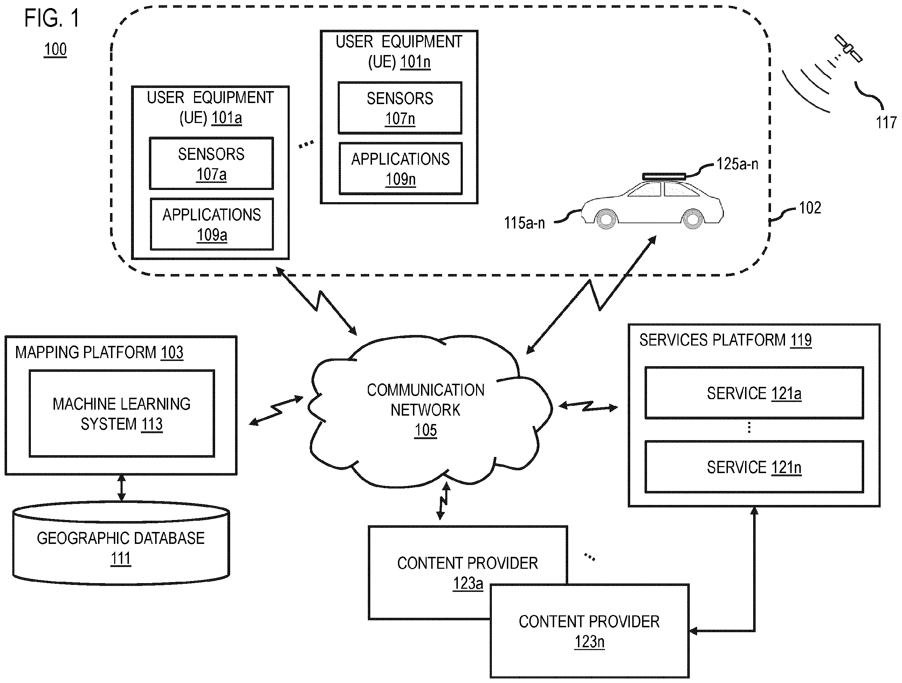

FIG. 1 is a diagram of a system capable of estimating population density change over time in an area where dynamic signals (e.g., probes) are either not available or dense enough to be representative, according to example embodiment(s). As described above, location-based service providers (e.g., mapping and navigation providers) are continually challenged to provide compelling services and applications. One area of development relates to population modeling (e.g., respective densities and changes over time). Census data is often used to determine the human population density and/or population change of a given area at a given time. For example, governmental agencies and/or businesses may use census data or other static data (e.g., satellite images) to allocate or distribute various resources (e.g., utilities, housing, shopping centers, etc.) in or at the given area.

However, an increasing number of innovations and/or systems require dynamic population data with high spatial and temporal resolution (e.g., for use with drone-based delivery systems, dynamic advertising, etc.). Census data, while prevalent, is often unsuitable for such applications because it is often static and/or has a low temporal resolution or granularity (e.g., collected every 10 years) and, therefore, can quickly become outdated and/or inaccurate (i.e., stale). In contrast, dynamic signals (e.g., probes) or high frequency movement or mobility data (e.g., cellular data, global positioning system (GPS) data, etc.) with high spatial and temporal resolutions can provide highly accurate human movement or mobility data. However, there are still many areas where such dynamic signals are not available or not dense enough to be representative (e.g., comprises a threshold coverage or sample size for a given area). Accordingly, service providers face significant technical challenges to estimate population density change over time with relatively high temporal resolution in areas where dynamic signals are either not available or dense enough to be representative.

To address these technical problems, a system 100 of FIG. 1 introduces a capability to estimate population density change over time in an area where dynamic signals (e.g., with high spatial and temporal resolutions) are either not available or dense enough to be representative, according to example embodiment(s). In one embodiment, the system 100 can enable a user interested in understanding population changes over time in a given area (e.g., city planner) to estimate the population density changes for such given areas by applying inferences from existing models (e.g., based on dynamic signals) to areas where only static map data (e.g., census data) is available (i.e., no dynamic signals are available).

In one embodiment, the system 100 can determine a set of unique map features (i.e., a vector of map features) of static map data that historically corresponds to changes in population for a given area over a given time (e.g., a prototypical week). For example, the map features may include functional classes of streets, building footprints, types of places or points of interest (POIs), etc. In one embodiment, the system 100 can use the set of unique map features or map features vector as an input to partition the map space (e.g., digital map space) of a given area. The system 100 can then determine clusters of map features vectors that have similar change functions, for example, by training a machine learning model (e.g., a classifier model, a regressor model, etc.) for each map partition based on the dynamic signals (e.g., telecommunications (telco) data) associated with each map partition. In one embodiment, the system 100 can compare the change function of each partition with all partitions that have similar static map vectors to find partitions that have similar change functions. In one instance, the system 100 can then apply the determined change functions/models to new areas (e.g., cities) that have similar static map features vectors (i.e., areas that are structurally similar with the city where the training was conducted) but dynamic signals are not available or are not dense enough to be representative.

In one embodiment, the system 100 can determine a set of unique map features (the "vector") that the system 100 can use as an input to partition the map space (e.g., digital map space) of a given area. In one instance, a vector may include an aggregate count of map features (e.g., types of POIs, types of restaurants, etc.). In one embodiment, the system 100 can determine the map features based on one or more of the following:
- Map and road attributes (e.g., functional class, width, size, directionality, speed limit, etc.);
- Building attributes (e.g., types, footprints, number of floors, etc.);
- Area classifications (e.g., residential, business, city, district, village, etc.);
- On street parking conditions (e.g., around delivery addresses);
- Parking restrictions;
- Lane attributes;
- Dynamic signals;
- Traffic data;
- POI density categories (e.g., restaurants, shopping, etc.); or
- Demographic and socio-economic attributes (e.g., census, car registries, etc.).

In one embodiment, the system 100 can use the set of unique map features or vector as an input to partition the two-dimensional digital map space of a given area to determine which clusters of map features vector have similar change functions (e.g., through a dedicated search functionality). In one instance, a "change function" as used by the system 100 can refer to a model that reflects the change of the human population as a function of time in a given time-period (e.g., daily, weekly, monthly, etc.). In one embodiment, the system 100 can determine that map features vector have similar change functions based on the distance between vectors.

In one instance, the system 100 can partition the map space into polygons (e.g., hexagons) in such a way that partitions with equal (or very similar) map features vectors have "similar" change functions. The system 100 can also partition the map space, for example, in a way that maximizes number of vectors with clusters of change functions greater than 1 partition. In one embodiment, there are two different "distances" involved: (a) map features vector distance, which is a vector space distance; and (b) function similarity distance, which is a periodic function similarity. In one instance, the area where the system 100 maps the map features vectors can be defined as a "functional urban area." By way of example, such areas are important because the system 100 can use the population models of such areas for inferring the population changes in areas without high frequency movement data. In one embodiment, it is contemplated that a given area need not be a traditional urban area, but simply an area with sufficiently dense mobility signal coverage to be considered representative (e.g., greater than 20-25% coverage of a given area).

In one embodiment, the system 100 can also create a set of partitions for the map space of a given area based on a given partitioning scheme (e.g., city grid, building block, building footprint, etc.) before determining the map features vectors. Then, once the map space is partitioned, the system 100 can generate map features vectors for each partition as described above.

In one embodiment, for each vector that has similar change functions, the system 100 can learn the change functions (model). In one instance, the system 100 can collect dynamic signals (e.g., probes) and/or high sampling frequency mobility data (e.g., cellular data, telecom data, GPS data, etc.) from one or more user equipment (UE) 101a-101n (also collectively or individually referred to as UEs 101 or a UE 101, respectively) (e.g., a mobile device, a smartphone, etc.) in a given area 102 to calculate a population change profile or change function for each partition of the area 102. In one embodiment, the UEs 101 have connectivity to the mapping platform 103 via the communication network 105. In one instance, the UEs 101 include one or more device sensors 107a-107n (also collectively referred to as device sensors 107) (e.g., cellular signal sensors, GPS sensors, etc.) and one or more applications 109a-109n (also collectively referred to as applications 109) (e.g., mapping applications, probe data collecting/reporting applications, etc.). In one embodiment, the system 100 can store the collected dynamic signals and/or high frequency movement data in the geographic database 111. In one instance, the probe data may be reported as probe points, which are individual data records collected at a point in time that records telemetry data for that point in time. A probe point can include attributes such as: (1) probe ID, (2) longitude, (3) latitude, (4) heading, (5) speed, and (6) time.

In one instance, the system 100 can learn the change function (model) for each map partition by training the machine learning system 113 (e.g., a classifier, a regressor, etc.) based on the collected dynamic signals and/or high frequency movement data (i.e., training data). In one embodiment, for each partition, the system 100 gets the change function and compares the partitions/change function across all partitions which have similar static map vector to find or cluster the partitions of the map spaces that have a similar population change function. In one instance, the system 100 can repeat the process (e.g., using a different partitioning scheme) until the system 100 can find distinct clusters of change functions.

In one embodiment, the system 100 can cluster the map partitions (e.g., stored in the geographic database 111) that have similar change function (population wise) and determine how many map features vectors lead to unique change functions. By way of example, a cluster may comprise map features with common attributes such as restaurants, buildings, traffic data (e.g., people leaving during the day and coming back at night). As such, the vector can provide the system 100 prior information for a typical area (e.g., residential) even if the system 100 does not have access to high frequency movement data. In one instance, the system 100 can select the partitioning scheme (e.g., city grid, building footprint, etc.) which maximizes |V|, where V is a set of all unique map features vector. In other words, V = {V₁, V₂, ....} which have more than one change function in the cluster.

In one embodiment, the system 100 can apply this change function to new areas (e.g., other cities) where dynamic signals (e.g., probes) are not available or are not dense enough to be representative but the new areas have the same or sufficiently similar vector of map features (e.g., residential area, business area) to estimate the change function for the new areas with relative accuracy. In one instance, the system 100 can determine the new areas heuristically. In other words, the system 100 can use the map features vector to find clusters of population change functions (e.g., based on vector distance) and then reuse the high frequency data (e.g., probes) at the new area to estimate the population density change over time.

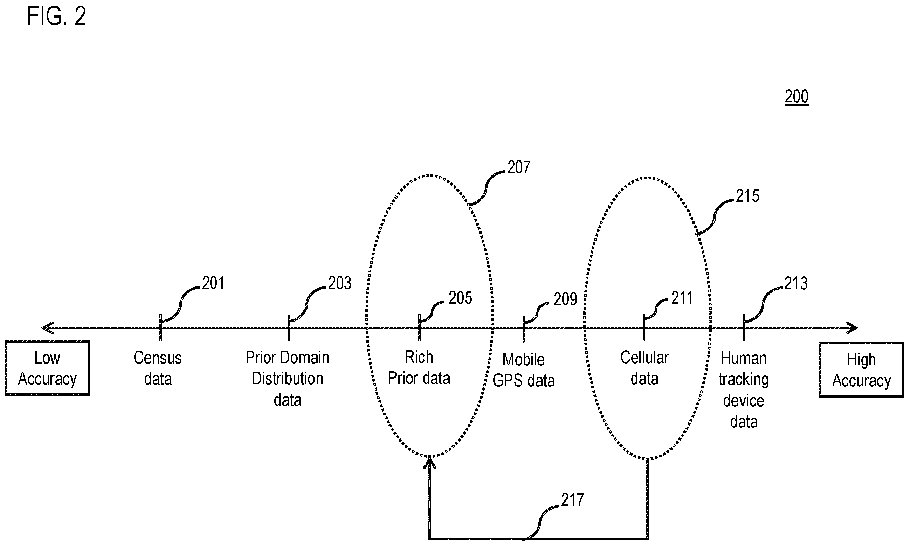

FIG. 2 is an illustrative example of a data spectrum 200 between relatively low accuracy data and relatively high accuracy data related to describing human movement, according to example embodiment(s). In this example, census data 201 is the least accurate mobility data based on its coarse spatial granularity (e.g., collected every 10 years). As described above, population models based solely on census data 201 can become quickly outdated and/or inaccurate (i.e., stale). Prior Domain Distribution data 203 represents the next level of temporal granularity and/or accuracy on the spectrum 200. For example, Prior Domain Distribution data 203 may be based on a Poisson distribution for vehicle/pedestrian counts. In one embodiment, Rich Prior data 205 (e.g., learned for a specific area 207) represents the map features vectors [X₁, X₂, X₃...], as discussed with respect to the various embodiments described herein. In this example, Mobile GPS data 209 may be considered by the system 100 as being more accurate than the Rich Prior data 205. For example, the Mobile GPS data 209 may have an accuracy of approximately 5 meters but only a coverage or sample size of approximately 5% for a given area. In contrast, Cellular data 211 (e.g., cellular telecom or telco data) may have an accuracy of 250 meters but a coverage or sample size of approximately 20-30% (i.e., a relatively large sample size). By way of example, this may represent the Cellular data 211 coverage of a densely populated city such as Berlin, Germany. In this example, the most accurate data is Human Tracking Data 213 (e.g., based on every human tracked via a device sensor 107 such as GPS).

In one embodiment, as discussed with respect to the various embodiments described herein, the system 100 can learn (e.g., using the machine learning system 113) the change functions corresponding to the feature attributes of area 215 based on the relatively accurate Cellular data 211 and then apply that knowledge to the map features vectors of the area 207 that share similar feature attributes, as depicted by the direction of the arrow 217. As such, in one embodiment, the system 100 can reuse the relative high frequency movement data of area 215 to improve the system 100's ability to determine population density change within the area 207.

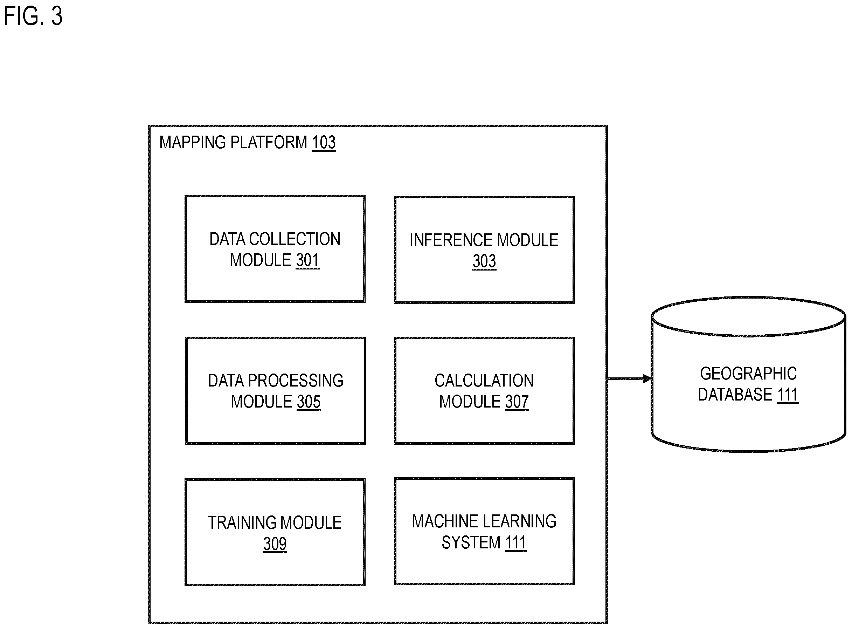

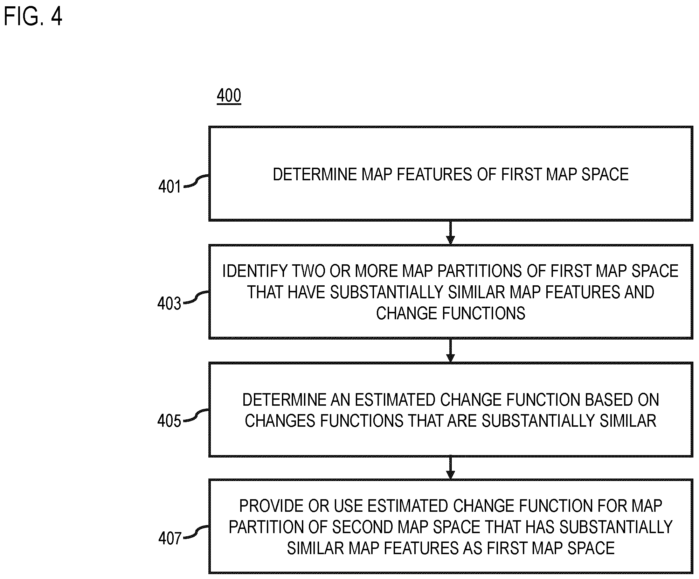

FIG. 3 is a diagram of the components of the mapping platform 103, according to example embodiment(s). By way of example, the mapping platform 103 includes one or more components for estimating population density change over time in an area where dynamic signals (e.g., probes) are either not available or dense enough to be representative, according to the example embodiment(s) described herein. It is contemplated that the functions of these components may be combined or performed by other components of equivalent functionality. In one embodiment, the mapping platform 103 includes a data collection module 301, an inference module 303, a data processing module 305, a calculation module 307, a training module 309, and the machine learning system 113, and has connectivity to the geographic database 111. The above presented modules and components of the mapping platform 103 can be implemented in hardware, firmware, software, or a combination thereof. Though depicted as a separate entity in FIG. 1, it is contemplated that the mapping platform 103 may be implemented as a module of any other component of the system 100. In another embodiment, the mapping platform 103, the machine learning system 113, and/or the modules 301-309 may be implemented as a cloud-based service, local service, native application, or combination thereof. The functions of the mapping platform 103, the machine learning system 113, and/or the modules 301-309 are discussed with respect to FIG. 4.

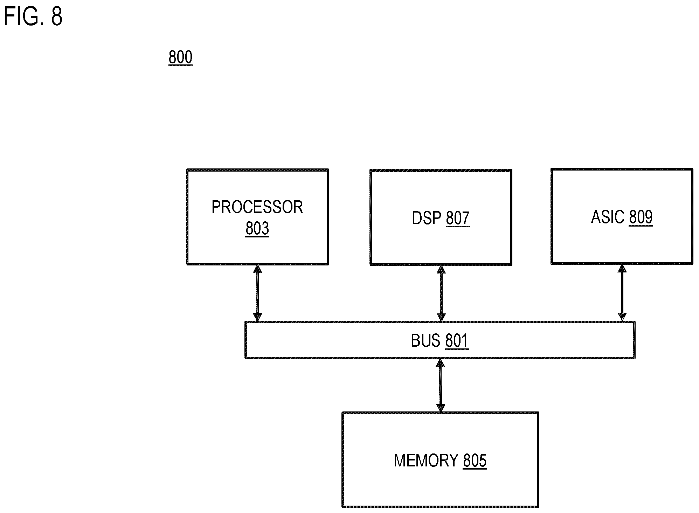

FIG. 4 is a flowchart of a process for estimating population density change over time in an area where dynamic signals are either not available or dense enough to be representative, according to example embodiment(s). In various embodiments, the mapping platform 103, the machine learning system 113, and/or any of the modules 301-309 may perform one or more portions of the process 400 and may be implemented in, for instance, a chip set including a processor and a memory as shown in FIG. 8. As such, the mapping platform 103, the machine learning system 113, and/or the modules 301-309 can provide means for accomplishing various parts of the process 400, as well as means for accomplishing embodiments of other processes described herein in conjunction with other components of the system 100. Although the process 400 is illustrated and described as a sequence of steps, its contemplated that various embodiments of the process 400 may be performed in any order or combination and need not include all the illustrated steps.

In step 401, the data collection module 301 can determine, by one or more processors, one or more map features of a first map space. In one embodiment, the map space (e.g., a digital map of a given area) can correspond to an area with a threshold population density, an urban area, or a combination thereof. In one embodiment, the threshold population density can be based on a density of dynamic signals and/or high frequency movement or mobility data that is sufficient to more accurately represent the human population movement or change in the given area relative to static census data (e.g., at least 20-25% coverage in a given area). The fact that the first map space corresponds to an area with sufficient dynamic signals is important, for example, because the rich prior movement information can relatively accurately describe how the population density of the given area changes over a temporal period (e.g., a prototypical week) and that information, in one embodiment, can be used by the inference module 303 to apply inferences from the first map space. As such, the data processing module 305 can estimate the population density or change of the structurally similar area with greater accuracy than based only on static map data. By way of example, the first map space may be a city center or a densely populated city such as Berlin, New York, etc.

In one embodiment, a map feature is a static map attribute of a given area (e.g., on a digital map). In one instance, the one or more map features may consist of attributes such as functional classes of streets, building footprints, number of floors, types of POIs, clusters of restaurants versus shops versus businesses, etc. The data collection module 301 may also determine one or more map features from one or more of the following attributes: map and road attributes, administrative divisions or classes, on street parking conditions, traffic data, road speed limits, etc. In one embodiment, the data collection module 301 can determine the one or more map features that comprise a unique set of map features (i.e., a vector of map features) that define the structural description of an area based on a set of map attributes. In one instance, the data collection module 301 can select the one or more features based on a threshold correspondence to population change (e.g., based on historical data stored in or accessed via the geographic database 111). In one embodiment, the data collection module 301 can determine the one or more map features (e.g., of a vector) based on brute force. In one instance, the data processing module 305 can count each map feature attribute at one or more levels of granularity (e.g., 10 restaurants or 5 Thai restaurants and 5 Greek restaurants; etc.) and then aggregate the counts for each vector or unique set of map features. In one instance, the determination of the one or more map features by the data collection module 301 is important, for example, to partition the first map space.

In step 403, the data processing module 305 identifies, by the one or more processors, two or more map partitions of the first map space based on the identified two or more map partitions (i) having map features that are substantially similar to one another in accordance with one or more unique combinations of the one or more determined map features, and (ii) having respective change functions that are substantially similar to one another. In one embodiment, the data processing module 305 can select a partitioning scheme to partition the first map space of a given area. In one instance, the data processing module 305 can partition the first map space based on polygons (e.g., hexagons), map tiles, etc. (e.g., when additional map-based data for a given area is unavailable). In contrast, in one embodiment, the data processing module 305 can partition the first map space based on a grid scheme, a building block scheme, a building footprint scheme, a street map network, or a combination thereof (e.g., when additional map-based data for given area is available). In one embodiment, the data processing module 305 can access additional map-based data stored in or accessed via the geographic database 111.

In one embodiment, a given change function represents a change of human population as a function of time in a given time-period and in association with a given map partition. In one instance, the calculation module 305 can determine the given change function for each map partition of the first map space based on one or more temporal resolutions. For example, the temporal resolution may be daily, weekly, monthly, a prototypical week, a year, Sunday to Sunday, etc. In one embodiment, the data processing module 305 can determine the change function for each partition and then compare the partition/change function across all partitions of the first map space which have a similar static map vector to determine whether similar partitions have similar population change.

In one instance, the data collection module 301 can determine dynamic population data for each map partition of the first map space, wherein the given change function, the change of human population, or a combination thereof is based on dynamic population data. In one embodiment, the dynamic population data comprises dynamic signal data, cellular data (e.g., telco data), GPS data, or a combination thereof. The data collection module 301's determining of dynamic population data for each map partition of the first map space is important because as depicted in FIG. 2, dynamic signal data (e.g., Cellular data 211 and even Mobile GPS data 209) is relatively more accurate than static Census data 201.

In one embodiment, the data processing module 305 can determine that two map features are substantially similar when the data processing module 305 determines that the map features vector distance is below a threshold distance. In one instance, the map features may include functional classes of streets, building footprints, number of floors, types of buildings (e.g., residential or office), types of POIs, types of clusters of POIs (e.g., office buildings versus retail stores or shops), etc. For example, each of the two or more map partitions may have map features such as businesses, restaurants, streets with speed limits below a particular speed limit (e.g., 30 miles per hour), etc. (e.g., representing a business area, a city center, etc. as opposed to a residential area, industrial zone, etc.). As such, the data processing module 305 can determine that the two or more map partitions are likely to have substantially similar human population movement and/or change function. For example, during a prototypical week, there may be a threshold density of people traveling into the area each morning of each day of the work week (e.g., Monday through Friday) and then a threshold density of people traveling out of the area each evening of each day. In contrast, during the weekends, the density of human movement and/or change function may be substantially less. The same may also be true for two or more map partitions that have map features with attributes like apartment buildings, public transport hubs (e.g., bus, subway, tram, etc.), gas stations, etc. representing a residential and/or mixed use area where there is a density of human population movement or change function that travels in and out during the work week portion of a prototypical week and then is substantially less during the weekends. In one instance, depending on the threshold map features vector distance, each of the two or more partitions may simply comprise similar types of POIs (e.g., restaurants versus hospitals) or each of the two or more partitions may comprise a certain number of fine dining restaurants versus a certain number of fast food restaurants (e.g., depending on the granularity of interest). For example, the human movement or change function relative to fine dining might be much slower than the human movement or change function relative to fast food restaurants and the overall change functions for the two or more partitions may be based on the respective numbers of such restaurants in each partition. In one instance, the two or more map partitions may be based on map features consisting of attributes such as number of floors. For example, buildings that have a number of floors below a certain threshold (e.g., 1-3) may be associated with a certain amount of human movement or change function (e.g., based on a historical average) and buildings having a number of floors above the certain threshold may be associated with a relatively greater amount of human movement given the likely greater number of people that will be moving in and out of the area over a given time (e.g., a prototypical week). In one embodiment, the data processing module 305 can determine that respective change functions are substantially similar based on a change function similarity distance being below a threshold distance.

In one instance, the training module 309 can train a classifier model, a regressor model, or a combination thereof (e.g., the machine learning system 113) for each map partition of the first map space based on the dynamic population data, wherein the given change function determined by the calculation module 307 of each map partition is further based on the trained classifier model, the trained regressor model, or a combination thereof. In other words, the training module 309 can train the machine learning system 113 to learn the respective change function (model) for each of the identified two or more partitions. In one embodiment, the training module 311 can select and/or update respective weights or weighting schemes used by the machine learning system 113 to calculate a population change profile for each partition. In one instance, the training module 309 can continuously provide and/or update a machine learning module (e.g., a support vector machine (SVM), neural network, decision tree, etc.) of the machine learning system 113 during training using, for example, supervised deep convolution networks or equivalents. In one embodiment, the training module 309 can train a machine learning model (e.g., a classifier, a regressor, or a combination thereof) using the respective weights or weighting schemes to enable the data processing module 305 to most effectively determine a partitioning scheme, that two or more map features are substantially similar, that respective change functions are substantially similar, or a combination thereof.

In step 405, the data processing module 305 can determine, by the one or more processors, an estimated change function based at least on one or more of the respective change functions that are substantially similar to one another and that are associated with the first map space. In one instance, the data processing module 305 can determine the estimated change function based on the one or more temporal resolutions that the calculation module 307 based the determination of the given change for each map partition of the first map space. In one embodiment, the data processing module 305 can determine the estimated change function based on a distinct cluster of change functions. As mentioned above, the data processing module 305 can partition the first map space to determine which clusters of map features vectors have similar change functions (e.g., through a dedicated search functionality).

In one embodiment, the identifying, by the one or more processors, of the two or more map partitions by the data processing module 305 comprises an iterative process, wherein each iteration comprises a unique partitioning scheme. In one embodiment, the iterative process seeks to maximize a number of the map features that are substantially similar and a number of the respective change functions that are substantially similar among the identified two or more map partitions. In other words, the data processing module 305, in connection with the data collection module 301, can keep looping until the data processing module 305 can find distinct clusters of change functions.

In step 407, the inference module 303 can provide or use, by the one or more processors, the estimated change function for at least one partition of a second map space based on the at least one partition of the second map space and at least one of the map partitions of the first map space having one or more map features that are substantially similar to one another. In one embodiment, while the second map space (e.g., of a digital map) may have a similar population density as the first map space (e.g., both spaces represent cities), the second map space may have one or more areas or map partitions that correspond to an area where dynamic signals (e.g., probes) are not available or are not dense enough to be representative of the human population movement of the area with more accuracy than that which can be determined based on static census map data. In one embodiment, the inference module 303 can determine at least one map partition of the second map space with the same or similar map features vectors (e.g., residential area, business areas, etc.) as at least one partition of the first map space. In one instance, based on the structural similarities between the respective at least one partitions, the inference module 303 can estimate the population density and/or population change for the at least one map partition of the second map space based on the respective change function of the at least one partition of the first map space. In other words, once the data processing module 305 finds the distinct clusters of change functions used to determine the estimated change function for the at least one partition of the first map space, the inference module 303 can reuse the corresponding high frequency location data (e.g., probe data) for the at least one partition of the second map space based on the data processing module 305's determination of the same or similar map features vectors. In one embodiment, the data processing module 305 can determine that the one or more map features of the first map space and the one or more map features of the second map space are substantially similar to one another if the corresponding map features vector distance is less than a threshold distance.

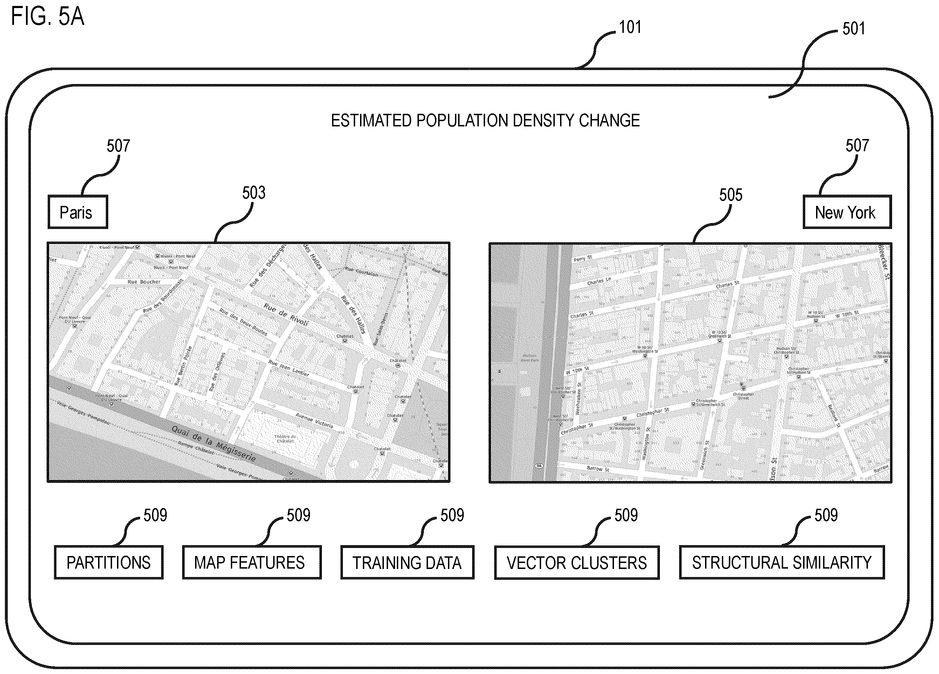

FIGs. 5A through 5E are diagrams of example user interfaces capable of estimating population density change over time in an area where dynamic signals are either not available or dense enough to be representative according to example embodiment(s). Referring to FIG. 5A, in one embodiment, the system 100 can generate a user interface (UI) 501 (e.g., a software verification application 109) for a UE 101 (e.g., a mobile device, a smartphone, a client terminal, etc.) that can allow a user (e.g., a software developer, a city planner, etc.) to estimate human population density changes over time (e.g., a prototypical week) in an area where only relatively inaccurate static map data (e.g., census data) is available based on inferences drawn from another area where relatively accurate dynamic map data (e.g., cellular data) is available and the two areas have a threshold number of structural similarities.

In one use case, for example, a user (e.g., a software developer) may want to certify to a government official that despite only having access to static map data (e.g., census data), one or more proposed unmanned delivery routes for one or more vehicles 115a-115n (also collectively referred to as vehicles 115) (e.g., autonomous vehicles, drones, etc.) correspond to the estimated population density changes for a given area with a sufficient temporal frequency to ensure a threshold level of safety to other vehicles, pedestrians, etc. In another use case example, a user (e.g., a software developer at an advertising company) with only access to static map data (e.g., often the least expensive relative to dynamic map data) may want to demonstrate that the company can effectively distribute one or more billboards in a given area such that the billboards with have a threshold amount of exposure by drivers, pedestrians, etc. In a further use case example, a user (e.g., a city planner) with only access to static map data (e.g., census data) may want to estimate the population density changes for a given area with a relatively higher temporal granularity to ensure that the requested building permits (e.g., for restaurants, grocery stores, drug stores, etc.) correspond to the current population density changes for the area within a threshold degree of accuracy so as to prevent overcrowding or insufficient coverage.

In one embodiment, the system 100 can generate the UI 501 so that a user (e.g., a software developer) can evaluate or verify the component parts of the system 100's population density estimation. In this example, the user is a software developer evaluating the proposed navigation routes for one or more unmanned vehicles 115 (e.g., an autonomous car, drone, etc.) within the static map area 503 (e.g., a portion of Paris) based on the population model created by the system 100 using the dynamic map area 505 (e.g., a portion of New York) according to the various embodiment described herein. In one embodiment, the system 100 can generate the UI 501 such that it includes inputs 507 to enable a user to input the area of interest 503 (e.g., Paris), the model 505 (e.g., New York), or a combination thereof. By way of example, a user can enter a name, select an area from a drop menu, input one or more geographic coordinate (e.g., latitude/longitude). In one embodiment, the system 100 can generate the UI 501 so that it includes one or more inputs 509 to further investigate and/or adjust one or more features that the system 100 bases the estimated population density change for a given area 503. For example, the one or more inputs 509 may include "partitions," "map features," "training data," "vector clusters," and/or "structural similarity." In one embodiment, the one or more inputs 507 and 509 and all other inputs similarly described herein with respect to FIGs. 5A-5E can be generated by the system 100 such that a user can interact with the input and/or the system 100 can receive information or data from the user through one or more physical interactions (e.g., a touch, a tap, a gesture, typing, etc.), one or more voice commands, or a combination thereof. In one instance, the system 100 can generate the UI 501 such that it can provide a user with one or more audio cues of notifications.

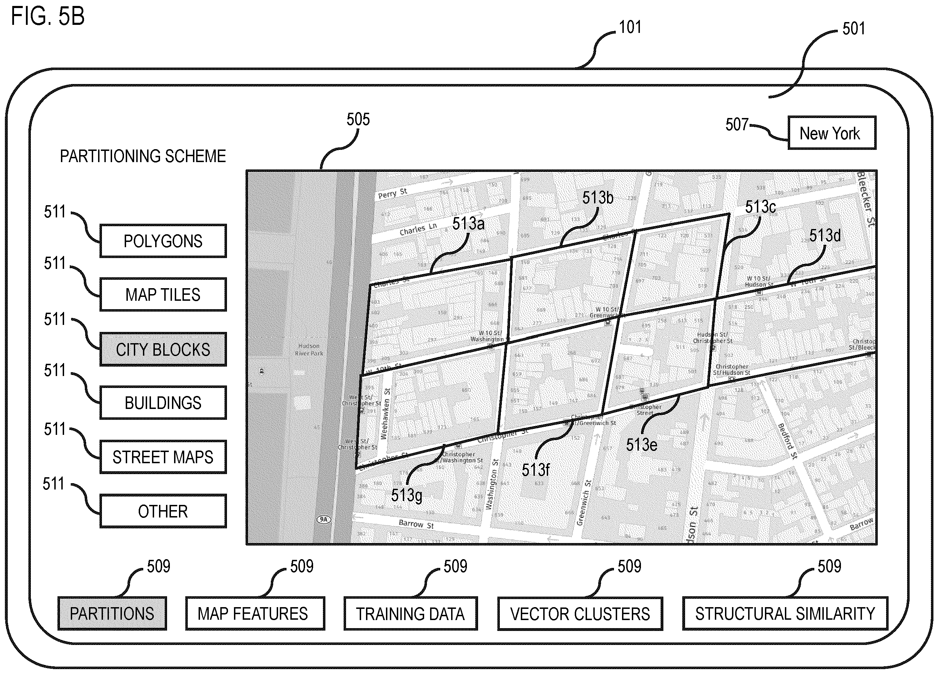

Referring to FIG. 5B, in one embodiment, after a user selects input 509 "partitions" in FIG. 5A (e.g., using a touch, a voice command, etc.), the system 100 can render in the UI 501 the one or more partitions that correspond to the partitioning scheme determined by the system 100 (e.g., using the machine learning system 113, heuristically, or a combination thereof) that maximizes the number of vectors with clusters of change functions greater than 1 partition as a starting point or a "default" partitioning scheme. In one instance, the system 100 can generate the UI 501 such that it includes one or more inputs 511 to enable a user to select or modify the current partitioning scheme used by the system 100 since in one embodiment, the system 100 can iteratively select the two or more partitions of a given area (e.g., New York). For example, the system 100 may generate a different population density estimation depending on the order of partitioning scheme iteration. In one instance, the system 100 can generate the one or more inputs 511 corresponding to "polygons," "map tiles," "city blocks," "buildings" (e.g., blocks and/or footprints), "street maps," and/or "other." In one embodiment, the system 100 can generate the UI 501 such that it includes an input 511 "other" so that a user can select one or more other possible partitioning schemes currently not presented in the UI 501 but known to the system 100 (e.g., stored in the geographic database 111) and/or so that a user can input her or his own partitioning scheme (e.g., average walking distance, average driving distance, average commuting distance, etc.).

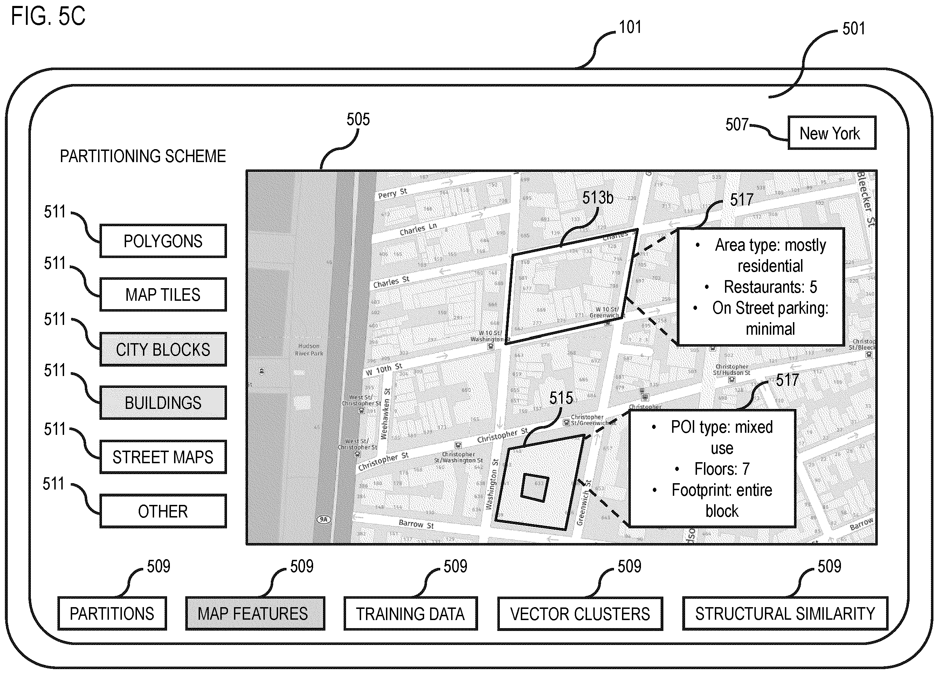

In this example, the user has selected the input 511 corresponding to "city blocks." As a result, the system 100 can render or display the dynamic map 505 with the various city block partitions 513a, 513b, 513c, ...513x (collectively partitions 513) identified in the UI 501. In one embodiment, the system 100 can generate the partitions 513 such that a user can interact with a partition 513 to further investigate or drill down to learn the one or more map features or map features vector determined by the system 100 for each partition 513, as depicted in FIG. 5C. In one instance, it is contemplated that a user can "toggle" back and forth through the various components of the system 100's estimation of population density change for a static map area (e.g., static map 503) using one or more of the inputs 509.

Referring to FIG. 5C, in one embodiment, the system 100 can generate the UI 501 such that a user can evaluate and/or verify the map features vector for each partition 513. In one embodiment, the system 100 can generate the UI 501 such that a user can simultaneously compare map features from two or more partitioning schemes to gain a better understanding of the structural characteristics within each partition 513. For example, partition 513b corresponding to "city blocks" and partition 515 corresponding to "buildings." In one embodiment, the system 100 can generate the UI 501 such that a user can either interact with a partition 513 to view the map features 517 determined by the system 100 for that partition or a user can also interact with map features input 509 to cause the system 100 to render the map features 517 for the partitions 513, 515, etc. being rendered by the system 100 at one time in the UI 501. In this example, the system 100 can determine the map features 517 that correspond to the partition 513b such as "area type: mostly residential;" "number of restaurants: 5;" "on street parking: minimal" and the map features 517 that correspond the partition 515 such as "POI type: mixed use" (e.g., apartments, gym, theater, etc.); number of "floors: 7;" building "footprint: entire block." In one embodiment, the system 100 can generate the UI 501 such that a user can interact or select one or more of the map features 517 to learn more about the features, the aggregate counts, etc.

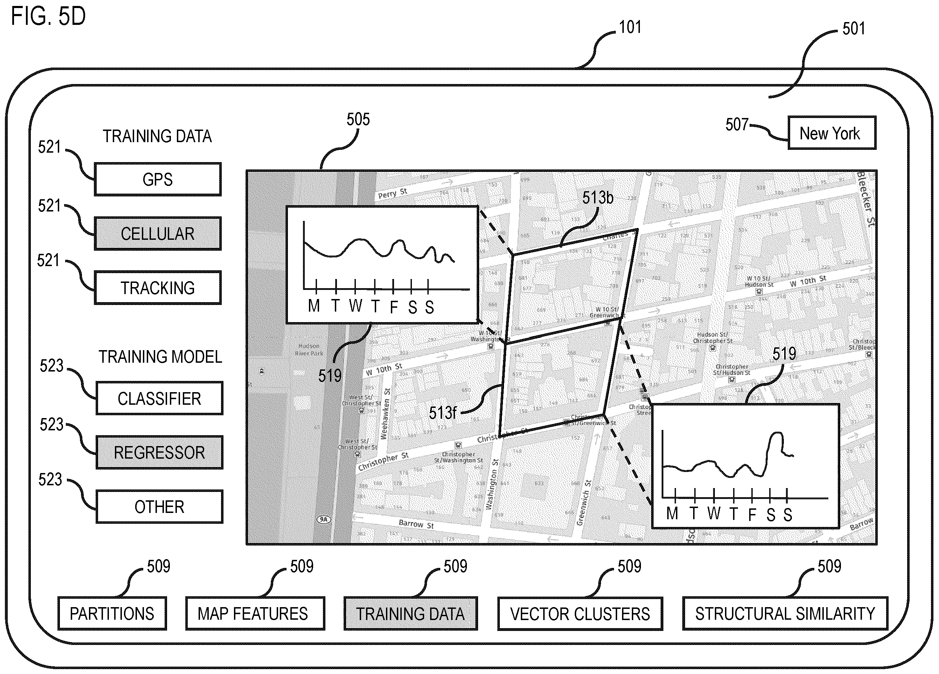

Referring to FIG. 5D, in one embodiment, the system 100 can generate the UI 501 such that a user can select an input 511 (e.g., "training data") to evaluate or verify the population change profiles 519 for each partition that the system 100 can use as training data to determine the change function for that partition 513. In one embodiment, the system 100 can generate the UI 501 such that it includes one or more inputs 521 to enable a user to select or change the type of dynamic data (e.g., "GPS," "Cellular," "Tracking) collected and/or used to train the machine learning system 113. For example, although Mobile GPS data 209 may be less accurate than Cellular data 211, which is used in one embodiment to train the system 100, in one area or for one temporal period (e.g., a prototypical week), the sample size may be greater or for some reason more readily available than the Cellular data 211. In one embodiment, the system 100 can generate the UI 501 such that it includes one or more inputs 523 to enable a user to select or change the type of training model (e.g., "Classifier," "Regressor," "other") used by the system 100 to determine the respective change functions for each partition.

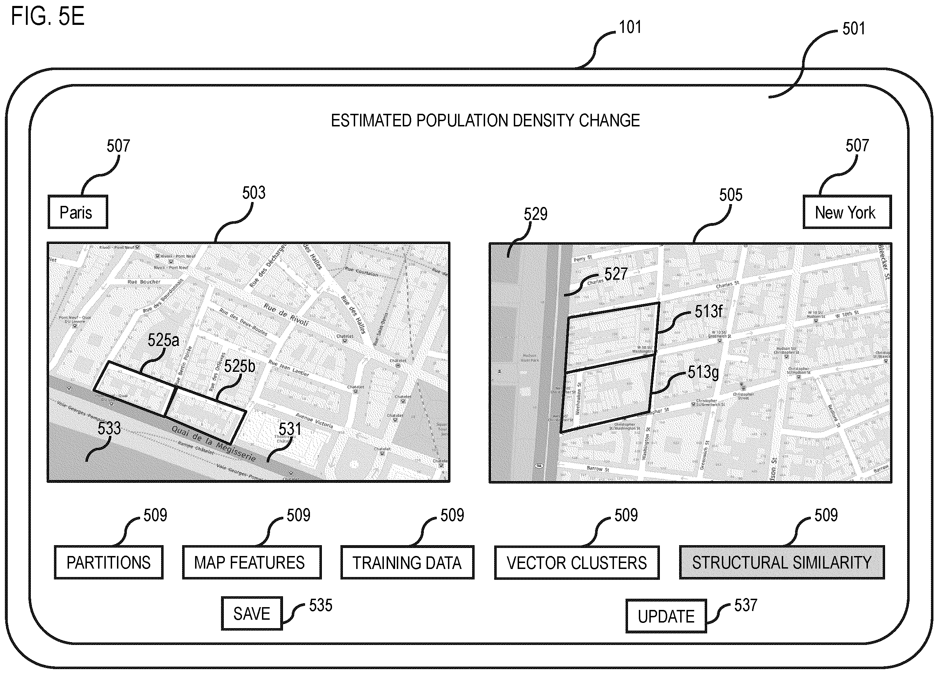

Referring to FIG. 5E, in one embodiment, the system 100 can apply the change function model determined by the system 100 in FIG. 5D to a new area (e.g., the static map area 503) based on a threshold similarity between respective vector of map features (i.e., similar feature attributes). In one instance, the new area (e.g., the static map area 503) may be like the dynamic map area 505 as a whole (e.g., both areas correspond to cities or areas with similar population densities, etc.). As such, one or more map partitions of the static map area 503 (e.g., partitions 525a and 525b) are likely to have similar map features/attributes as the map features/attributes of one or more partitions of the dynamic map area 505 (e.g., partitions 513a-513g); however, the static map area 503 and the dynamic map area 505 need not necessarily be the same or similar (e.g., in terms of overall population densities) in order for both area to have one or more map partitions with a threshold similarity between respective vector of map features (e.g., partitions 513f and 513g of the dynamic map area 505 and partitions 525a and 525b of the static map area 503). For example, the static map area 503 may include a densely populated city center area whereas the remainder of the area is relatively sparse compared to the overall densely populated dynamic map area 505; however, the one or more map partitions that are within the threshold similarly (e.g., partitions 525a and 525b) may be derived from this city center area.

In this example, the system 100 can determine (e.g., using the machine learning system 113, heuristics, etc.) that the partitions 513f and 513g of the dynamic map 505 (e.g., adjacent to a busy thoroughfare 527 and proximate to a waterway 529) have respective static map vectors (e.g., V₁ and V₂) that are within a threshold vector distance of each other. In other words, the static map vectors (e.g., V₁ and V₂) comprise a cluster that the system 100 can determine has a change function (e.g., CFi) based on the high frequency movement data (e.g., Cellular data 521) and a regressor training model 523.

In this example, the system 100 can also determine according to the various embodiments described herein that the partitions 525a and 525b of the static map 503 (e.g., adjacent to a busy thoroughfare 531 and proximate to a waterway 533) have respective static map vectors (e.g., V₁ and V₂) that are within a threshold vector distance. In one embodiment, the system 100 can then apply the change function of the partitions 513f and 513g of the dynamic map 505 (e.g., CFi) to the partitions 525a and 525b of the static map 503 to estimate that the partitions 525a and 525b likely have the same or similar change function (e.g., CFi). In one instance, the system 100 can generate the UI 501 such that it includes an input 535 (e.g., "save") to enable the user to save the inferred change function information (e.g., in the geographic database 111) for future use. In one embodiment, the system 100 can generate the UI 501 such that it includes an input 537 (e.g., "update") so that a user can update the training data collected and/or used in FIG. 5D to ensure that the system 100 is not determining the estimated population density change based on a snapshot, but rather based on dynamic mobility data.

Returning to FIG. 1, in one embodiment, the UEs 101 (e.g., a mobile device, a smartphone, a client terminal, etc.) may be associated with any person (e.g., a pedestrian, a driver, a software developer, etc.), any person driving or traveling in a vehicle 115, or with any vehicles 115 (e.g., an embedded navigation system) in a given area (e.g., area 102). By way of example, the UEs 101 can be any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, fitness device, television receiver, radio broadcast receiver, electronic book device, game device, devices associated with the vehicles 115 or any combination thereof, including the accessories and peripherals of these devices, or any combination thereof. It is also contemplated that a UE 101 can support any type of interface to the user (such as "wearable" circuitry, etc.). In one embodiment, the vehicles 115 may have cellular or wireless fidelity (Wi-Fi) connection either through the inbuilt communication equipment or from a UE 101 associated with the vehicles 115. Also, the UEs 101 may be configured to access the communication network 105 by way of any known or still developing communication protocols. In one embodiment, the UEs 101 may include the mapping platform 103 to estimate population density change over time in an area where dynamic signals are either not available or dense enough to be representative.

In one embodiment, the UEs 101 include device sensors 107 (e.g., GPS sensors, location sensors, a front facing camera, a rear facing camera, sound sensors, height sensors, tilt sensors, moisture sensors, pressure sensors, wireless network sensors, etc.) and applications 109 (e.g., mapping applications, probe data collecting/reporting applications, transport & logistics applications, routing applications (e.g., routing algorithms), real-time traffic applications, data clustering applications, partitioning application, POI-based applications, etc.). In one example embodiment, the GPS sensors 107 can enable the UEs 101 to obtain geographic coordinates from satellites 117 for determining current or live location and time. Further, a user location within an area may be determined by a triangulation system such as A-GPS, Cell of Origin, or other location extrapolation technologies when cellular or network signals are available.

In one embodiment, the mapping platform 103 performs the process for estimating population density change over time in an area where dynamic signals are either not available or dense enough to be representative as discussed with respect to the various embodiments described herein. In one embodiment, the mapping platform 103 can be a standalone server or a component of another device with connectivity to the communication network 105. For example, the component can be part of an edge computing network where remote computing devices (not shown) are installed along or within proximity of an intended destination (e.g., a city center).

In one embodiment, the machine learning system 113 of the mapping platform 103 can include a neural network or other machine learning system to compare the change function for each partition across all partitions which have a similar static map features vector and keep looping (e.g., iteratively) until distinct clusters of change functions can be determined. In one instance, the machine learning system 113 can be used to partition the map space (e.g., digital map space) of a given area (e.g., area 102) iteratively using one or more partitioning schemes to maximize the number of vectors with clusters of change functions greater than 1 partition. In one embodiment, the machine learning system 113 is trained (e.g., by the training module 309 of the mapping platform 103) for each map partition on high frequency movement or mobility data (e.g., cellular or telco data). In one embodiment, the machine learning system 113 can select and/or update the respective weights or weighting schemes related to the learned change functions, similarities between partitions and/or population change functions (e.g., map feature vector distance and change function similarity distance, respectively), or a combination thereof. For example, the machine learning system 113 can assign relatively greater weight to cellular data compared to mobile GPS data and/or rich prior data. In one instance, the machine learning system 113 can assign relatively more weight to relatively more recent mobility data compared with relatively less recent mobility data to better ensure that the machine learning system 113 can capture the dynamic change of population in the given area.

In one embodiment, the machine learning system 113 can iteratively improve the speed and accuracy by which the system 100 can determine which signals in the static map data are needed to predict how change in a population looks like over time (e.g., a prototypical week), determine which partitioning schemes maximize number of vectors with clusters of changes functions, learn change functions (model) for each vector, find distinct clusters of change functions among the various partitions, which cities have similar static map vector and, therefore, are candidates for applying inferences based on dynamic signals to a new area with only static map data (e.g., census data), or a combination thereof. In one embodiment, the neural network of the machine learning system 113 is a traditional convolutional neural network which consists of multiple layers of collections of one or more neurons (which are configured to process a portion of an input data). In one embodiment, the machine learning system 113 also has connectivity or access over the communication network 105 to the geographic database 111 that can store labeled or marked features (e.g., change functions (model) for each vector, partitioning schemes, map features vectors, population density models, area specific mobility graphs, historical movement patterns, respective weights or weighting schemes, etc.).

In one embodiment, the mapping platform 103 has connectivity over the communications network 105 to the services platform 119 (e.g., an OEM platform) that provides the services 121a-121n (also collectively referred to herein as services 121) (e.g., mapping services). By way of example, the services 121 may also include mapping services, navigation services, clustering services (e.g., Density Based Cluster (DBSCAN)), data analysis services (e.g., Bayesian analysis), partitioning services, extrapolating services, shared vehicle or mobility services, traffic incident services, travel planning services, notification services, social networking services, content (e.g., audio, video, images, etc.) provisioning services, application services, storage services, contextual information determination services, location-based services, information-based services (e.g., weather, news, etc.), etc. In one embodiment, the services platform 119 uses the output of the mapping platform 103 (e.g., an estimated population density change function) to provide location-based services such as navigation, mapping, population density-based services, etc.

In one embodiment, the content providers 123a-123n (also collectively referred to herein as content providers 123) may provide content or data (e.g., large data sets of mobility data such as Telco data, GPS data, software development kit (SDK) data, etc.), map attribute data, parking data, POI-based data mobility graphs, historical movement patterns, road types and geometries, area population or density models, traffic data (e.g., vehicle and pedestrian), etc. to the UEs 101, the mapping platform 103, the applications 109, the geographic database 111, the machine learning system 113, the vehicles 115, the services platform 119, and the services 121. The content provided may be any type of content, such as map content, text-based content, audio content, video content, image content, etc. In one embodiment, the content providers 123 may provide content regarding the movement of a UE 101, a vehicle 115, or a combination thereof on a digital map or link as well as content that may aid in localizing a user path or trajectory on a digital map or link to assist, for example, with determining the change of the human population as a function of time in a given time-period (e.g., daily, weekly, monthly, etc.). In one embodiment, the content providers 123 may also store content associated with the mapping platform 103, the geographic database 111, the vehicles 115, the services platform 119, and/or the services 121. In another embodiment, the content providers 123 may manage access to a central repository of data, and offer a consistent, standard interface to data, such as a repository of the geographic database 111.

In one embodiment, a UE 101 and/or a vehicle 115 may be part of a probe-based system for collecting probe data for calculate population change profile for each partition. In one embodiment, each UE 101 and/or vehicle 115 is configured to report probe data as probe points, which are individual data records collected at a point in time that records telemetry data for that point in time. In one embodiment, the probe ID can be permanent or valid for a certain period of time. In one embodiment, the probe ID is cycled, particularly for consumer-sourced data, to protect the privacy of the source.

In one embodiment, a probe point can include attributes such as: (1) probe ID, (2) longitude, (3) latitude, (4) heading, (5) speed, and (6) time. The list of attributes is provided by way of illustration and not limitation. Accordingly, it is contemplated that any combination of these attributes or other attributes may be recorded as a probe point. For example, attributes such as altitude (e.g., for flight capable vehicles or for tracking non-flight vehicles in the altitude domain), tilt, steering angle, wiper activation, etc. can be included and reported for a probe point. In one embodiment, the vehicles 115 may include one or more vehicle sensors 125a-125a (also collectively referred to as vehicle sensors 125) (e.g., GPS sensors) for reporting measuring and/or reporting attributes. The attributes can also be any attribute normally collected by an on-board diagnostic (OBD) system of the vehicles 115, and available through an interface to the OBD system (e.g., OBD II interface or other similar interface).

In one embodiment, the probe points can be reported from the UEs 101 and/or the vehicles 115 in real-time, in batches, continuously, or at any other frequency requested by the system 100 over, for instance, the communication network 105 for processing by the mapping platform 103. The probe points also can be map matched to specific road links stored in the geographic database 111. In one embodiment, the system 100 can generate user or vehicle paths or trajectories from the observed and expected frequency of probe points for an individual probe so that the probe traces represent routes for all available transport modes, user historical routes, or a combination thereof through a given area (e.g., an urban area, city, etc.).

In one embodiment, as previously stated, the vehicles 115 are configured with various sensors (e.g., vehicle sensors 125) for generating or collecting probe data, sensor data, related geographic/map data (e.g., traffic data), etc. In one embodiment, the sensor data may be associated with a geographic location or coordinates at which the sensor data was collected (e.g., a latitude and longitude pair). In one embodiment, the probe data (e.g., stored in or accessible via the geographic database 111) includes location probes collected by one or more vehicle sensors 125. By way of example, the vehicle sensors 125 may include a RADAR system, a LiDAR system, global positioning sensor for gathering location data (e.g., GPS), a network detection sensor for detecting wireless signals or receivers for different short-range communications (e.g., Bluetooth, Wi-Fi, Li-Fi, NFC, etc.), temporal information sensors, a camera/imaging sensor for gathering image data, an audio recorder for gathering audio data, velocity sensors mounted on a steering wheel of the vehicles 115, switch sensors for determining whether one or more vehicle switches are engaged (e.g., driving lights on), and the like. Though depicted as automobiles, it is contemplated the vehicles 115 can be any type of private, public, or shared manned or unmanned vehicle (e.g., cars, trucks, buses, vans, motorcycles, scooters, bicycles, drones, etc.) that can traverse a given area (e.g., an urban area, a functional urban area, or a combination thereof).

Other examples of vehicle sensors 125 may include light sensors, orientation sensors augmented with height sensors and acceleration sensor (e.g., an accelerometer can measure acceleration and can be used to determine orientation of the vehicle), tilt sensors to detect the degree of incline or decline of a vehicle 115 along a path of travel, moisture sensors, pressure sensors, etc. In a further example embodiment, vehicle sensors 125 about the perimeter of a vehicle 115 may detect the relative distance of the vehicle 115 from a physical divider, a lane line of a link or roadway, the presence of other vehicles, pedestrians, traffic lights, potholes and any other objects, or a combination thereof. In one scenario, the vehicle sensors 125 may detect contextually available information such as weather data, traffic information, or a combination thereof. In one embodiment, a vehicle 115 may include GPS or other satellite-based receivers 125 to obtain geographic coordinates from satellites 117 for determining current location and time in relation to a reference mobility pattern, one or more POIs of the plurality, or a combination thereof. Further, the location can be determined by visual odometry, triangulation systems such as A-GPS, Cell of Origin, or other location extrapolation technologies.

In one embodiment, the UEs 101 may also be configured with various sensors (e.g., device sensors 107) for acquiring and/or generating dynamic signals, probe data, and/or sensor data associated with a user, a vehicle 115 (e.g., a driver or a passenger), other vehicles, attributes or characteristic of a given area (e.g., static map features, partitions, etc.). For example, the device sensors 107 may be used as GPS receivers for interacting with the one or more satellites 117 to determine a user location (origin) as well as to track the current speed, position and location of a user or a vehicle 115 travelling along a link or on a road segment (e.g., when recording travel times, dwell times, area specific mobility patterns, etc.). In addition, the device sensors 107 may gather tilt data (e.g., a degree of incline or decline of a vehicle 115 during travel), motion data, light data, sound data, image data, weather data, temporal data, and other data associated with the UEs 101 and/or vehicles 115. Still further, the device sensors 107 may detect a local or transient network and/or wireless signals (e.g., transaction information), such as those transmitted by nearby devices during navigation along a roadway (Li-Fi, NFC), etc.

It is noted therefore that the above described data may be transmitted via the communication network 105 as probe data according to any known wireless communication protocols. For example, each UE 101, application 109, user, and/or vehicle 115 may be assigned a unique probe identifier (probe ID) for use in reporting or transmitting said probe data collected by the UEs 101 and/or vehicles 115. In one embodiment, each UE 101 and/or vehicle 115 is configured to report probe data as probe points, which are individual data records collected at a point in time that records telemetry data.

In one embodiment, the mapping platform 103 retrieves aggregated probe points gathered and/or generated by the device sensors 107 and/or vehicle sensors 125 resulting from the travel of the UEs 101 and/or vehicles 115 on a road segment of a road network of a digital map space (e.g., as the part of human population movement). In one instance, the geographic database 111 stores a plurality of probe points and/or trajectories generated by different UEs 101, device sensors 107, applications 109, vehicles 115, and vehicle sensors 125, etc. over a period (e.g., daily, weekly, monthly, etc.). A time sequence of probe points specifies a trajectory-i.e., a path traversed by a UE 101, a vehicle 115, etc. over the period.

In one embodiment, the communication network 105 of the system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

In one embodiment, the mapping platform 103 may be a platform with multiple interconnected components. The mapping platform 103 may include multiple servers, intelligent networking devices, computing devices, components, and corresponding software for providing parametric representations of lane lines. In addition, it is noted that the mapping platform 103 may be a separate entity of the system 100, a part of the services platform 119, a part of the one or more services 121, or included within a vehicle 115 (e.g., an embedded navigation system).

In one embodiment, the geographic database 111 can store information or data regarding collected dynamic signals and/or high frequency movement or mobility data (e.g., probes, cellular data, or a combination thereof). In one instance, the geographic database 111 can store information or data relative to one or more map partitions, one or more clusters of map partitions, one or more map features based on a threshold correspondence to population change, or a combination thereof. In one embodiment, the geographic database 111 can store information or data regarding additional map-based data (e.g., building footprint), inferred change function information, labeled or marked features for training the machine learning system 113, specific road links, or a combination thereof. In one instance, the geographic database 111 can store information or data regarding one or more probes, probe points, probe trajectories, or a combination thereof. The information may be any of multiple types of information that can provide means for estimating population density change over time in an area where dynamic signals are either not available or dense enough to be representative. In one embodiment, the geographic database 111 can be in a cloud and/or in a UE 101, a vehicle 115, or a combination thereof.

By way of example, the UEs 101, mapping platform 103, device sensors 107, applications 109, vehicles 115, satellites 117, services platform 119, services 121, content providers 123, and/or vehicle sensors 125 communicate with each other and other components of the system 100 using well known, new or still developing protocols. In this context, a protocol includes a set of rules defining how the network nodes within the communication network 105 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

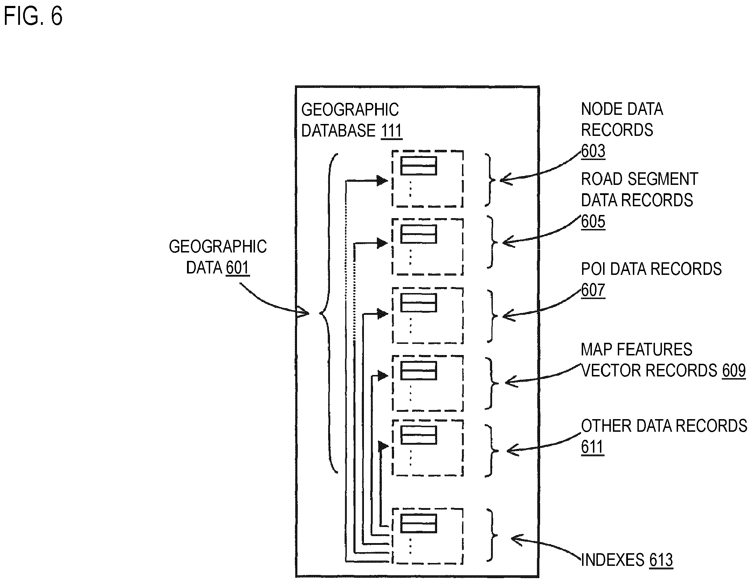

FIG. 6 is a diagram of a geographic database, according to example embodiment(s). In one embodiment, the geographic database 111 includes geographic data 601 used for (or configured to be compiled to be used for) mapping and/or population modeling-related services. In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 111.
"Node" - A point that terminates a link.
"Line segment" - A straight line connecting two points.
"Link" (or "edge") - A contiguous, non-branching string of one or more-line segments terminating in a node at each end.
"Shape point" - A point along a link between two nodes (e.g., used to alter a shape of the link without defining new nodes).
"Oriented link" - A link that has a starting node (referred to as the "reference node") and an ending node (referred to as the "non reference node").
"Simple polygon" - An interior area of an outer boundary formed by a string of oriented links that begins and ends in one node. In one embodiment, a simple polygon does not cross itself.
"Polygon" - An area bounded by an outer boundary and none or at least one interior boundary (e.g., a hole or island). In one embodiment, a polygon (e.g., a hexagon) is constructed from one outer simple polygon and none or at least one inner simple polygon. A polygon is simple if it just consists of one simple polygon, or complex if it has at least one inner simple polygon.

In one embodiment, the geographic database 111 follows certain conventions. For example, links do not cross themselves and do not cross each other except at a node. Also, there are no duplicated shape points, nodes, or links. Two links that connect each other have a common node. In the geographic database 111, overlapping geographic features are represented by overlapping polygons. When polygons overlap, the boundary of one polygon crosses the boundary of the other polygon. In the geographic database 111, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 111 includes node data records 603, road segment or link data records 605, POI data records 607, map features vector records 609, other records 611, and indexes 613, for example. More, fewer, or different data records can be provided. In one embodiment, additional data records (not shown) can include cartographic ("carto") data records, routing data, and maneuver data. In one embodiment, the indexes 613 may improve the speed of data retrieval operations in the geographic database 111. In one embodiment, the indexes 613 may be used to quickly locate data without having to search every row in the geographic database 111 every time it is accessed. For example, in one embodiment, the indexes 613 can be a spatial index of the polygon points associated with stored feature polygons.

In exemplary embodiments, the road segment data records 605 are links or segments representing roads, streets, or paths (e.g., that are unique to an area) that can be used for estimating population density change over time in an area where dynamic signals are either not available or dense enough to be representative. The node data records 603 are end points corresponding to the respective links or segments of the road segment data records 605. The road link data records 605 and the node data records 603 represent a road network, such as used by vehicles 115 and/or other entities. Alternatively, the geographic database 111 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as a restaurant, a retail shop, an office, etc. The geographic database 111 can include data about the POIs and their respective locations in the POI data records 607. In one embodiment, the POI data records 607 can include population density data, hours of operation, popularity or preference data, prices, ratings, reviews, and various other attributes. The geographic database 111 can also include data about places, such as cities, towns, or other communities, and other geographic features, such as bodies of water, mountain ranges, etc. Such place or feature data can be part of the POI data records 607 or can be associated with POIs or POI data records 607 (such as a data point used for displaying or representing a portion of a city).

In one embodiment, the geographic database 111 includes map features vector records 609 (e.g., the structural description of an area based on a set of map attributes). In one instance, the map features vector records 609 include prior determinations or observations of which signals in static map data are needed to predict how change in a human population looks over time (e.g., a prototypical week). In one embodiment, the map feature vector records 609 can also include the learned changed functions (model) for each vector. By way of example, the dynamic signals (e.g., probes, cellular data, telco data, GPS data, etc.) may be previously or recently recorded data, crowdsourced data, or a combination thereof. In one instance, the map features vector records 609 may also include mobility graph/mobility patterns for a given area (e.g., area 102), ranking or probability weights or weighting schemes, labeled and/or marked features and attributes, and/or any other related data. In one embodiment, the map features vector records 609 can be associated with one or more of the node data records 603, road segment or link records 605, and/or POI data records 607; or portions thereof (e.g., smaller or different segments than indicated in the road segment records 605) to estimate population density change over time in an area where dynamic signals are either not available or dense enough to be representative.

In one embodiment, the geographic database 111 can be maintained by the services platform 119 (e.g., a map developer). The map developer can collect human movement data to generate and enhance the geographic database 111. There can be different ways used by the map developer to collect data. These ways can include obtaining data from other sources, such as municipalities or respective geographic authorities. In addition, the map developer can employ field personnel to travel by a vehicle 115 along roads throughout an area of interest (e.g., area 102) to observe and/or record information regarding observable human population movement. Similarly, the map developer can employ field personnel to travel by foot throughout an area of interest (e.g., area 102) to observe human population movement. Also, remote sensing, such as aerial or satellite photography, can be used.

In one embodiment, the geographic database 111 include high resolution or high definition (HD) mapping data that provide centimeter-level or better accuracy of map features. For example, the geographic database 111 can be based on LiDAR or equivalent technology to collect billions of 3D points and model road surfaces and other map features down to the number lanes and their widths. In one embodiment, the HD mapping data capture and store details such as the slope and curvature of the road, lane markings, roadside objects such as signposts, including what the signage denotes. By way of example, the HD mapping data enable highly automated vehicles 115 to precisely localize themselves on a road, and to determine the road attributes (e.g., direction of traffic) at high accuracy levels.

In one embodiment, the geographic database 111 is stored as a hierarchical or multilevel tile-based projection or structure. More specifically, in one embodiment, the geographic database 111 may be defined according to a normalized Mercator projection. Other projections may be used. By way of example, the map tile grid of a Mercator or similar projection is a multilevel grid. Each cell or tile in a level of the map tile grid is divisible into the same number of tiles of that same level of grid. In other words, the initial level of the map tile grid (e.g., a level at the lowest zoom level) is divisible into four cells or rectangles. Each of those cells are in turn divisible into four cells, and so on until the highest zoom or resolution level of the projection is reached.

In one embodiment, the map tile grid may be numbered in a systematic fashion to define a tile identifier (tile ID). For example, the top left tile may be numbered 00, the top right tile may be numbered 01, the bottom left tile may be numbered 10, and the bottom right tile may be numbered 11. In one embodiment, each cell is divided into four rectangles and numbered by concatenating the parent tile ID and the new tile position. A variety of numbering schemes also is possible. Any number of levels with increasingly smaller geographic areas may represent the map tile grid. Any level (n) of the map tile grid has 2(n+1) cells. Accordingly, any tile of the level (n) has a geographic area of A/2(n+1) where A is the total geographic area of the world or the total area of the map tile grid 10. Because of the numbering system, the exact position of any tile in any level of the map tile grid or projection may be uniquely determined from the tile ID.

In one embodiment, the system 100 may identify a tile by a quadkey determined based on the tile ID of a tile of the map tile grid. The quadkey, for example, is a one-dimensional array including numerical values. In one embodiment, the quadkey may be calculated or determined by interleaving the bits of the row and column coordinates of a tile in the grid at a specific level. The interleaved bits may be converted to a predetermined base number (e.g., base 10, base 4, hexadecimal). In one example, leading zeroes are inserted or retained regardless of the level of the map tile grid to maintain a constant length for the one-dimensional array of the quadkey. In another example, the length of the one-dimensional array of the quadkey may indicate the corresponding level within the map tile grid 10. In one embodiment, the quadkey is an example of the hash or encoding scheme of the respective geographical coordinates of a geographical data point that can be used to identify a tile in which the geographical data point is located.

The geographic database 111 can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by a UE 101, a device sensor 107, a vehicle 115, and/or a vehicle sensor 125. The navigation-related functions can correspond to vehicle navigation (e.g., a drone), pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for estimating population density change over time in an area where dynamic signals are either not available or dense enough to be representative may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

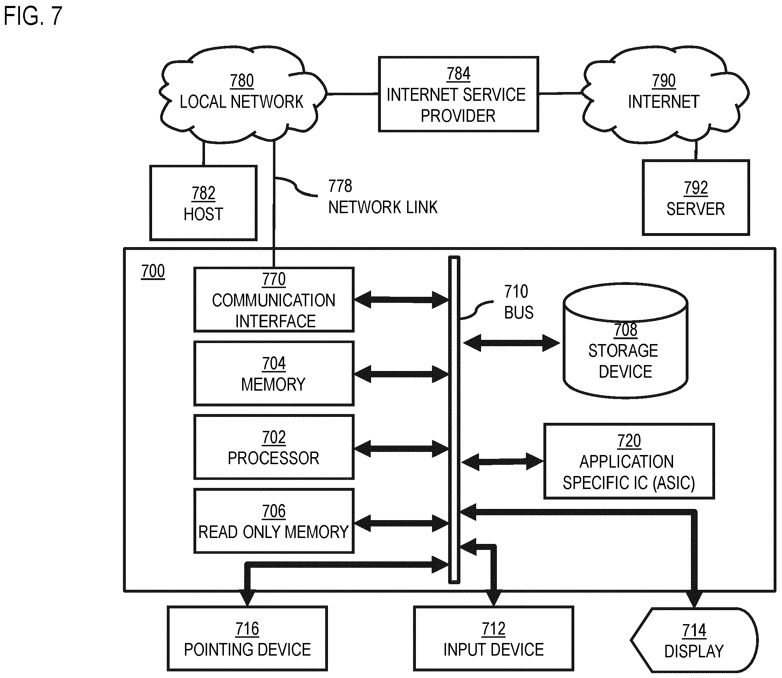

FIG. 7 illustrates a computer system 700 upon which example embodiment(s) of the invention may be implemented. Computer system 700 is programmed (e.g., via computer program code or instructions) to estimate population density change over time in an area where dynamic signals are either not available or dense enough to be representative as described herein and includes a communication mechanism such as a bus 710 for passing information between other internal and external components of the computer system 700. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 710 includes one or more parallel conductors of information so that information is transferred quickly among devices coupled to the bus 710. One or more processors 702 for processing information are coupled with the bus 710.

A processor 702 performs a set of operations on information as specified by computer program code related to estimating population density change over time in an area where dynamic signals are either not available or dense enough to be representative. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 710 and placing information on the bus 710. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 702, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 700 also includes a memory 704 coupled to bus 710. The memory 704, such as a random-access memory (RAM) or other dynamic storage device, stores information including processor instructions for estimating population density change over time in an area where dynamic signals are either not available or dense enough to be representative. Dynamic memory allows information stored therein to be changed by the computer system 700. RAM allows a unit of information stored at a location called a memory address to be stored and retrieved independently of information at neighboring addresses. The memory 704 is also used by the processor 702 to store temporary values during execution of processor instructions. The computer system 700 also includes a read only memory (ROM) 706 or other static storage device coupled to the bus 710 for storing static information, including instructions, that is not changed by the computer system 700. Some memory is composed of volatile storage that loses the information stored thereon when power is lost. Also coupled to bus 710 is a non-volatile (persistent) storage device 708, such as a magnetic disk, optical disk or flash card, for storing information, including instructions, that persists even when the computer system 700 is turned off or otherwise loses power.

Information, including instructions for estimating population density change over time in an area where dynamic signals are either not available or dense enough to be representative, is provided to the bus 710 for use by the processor from an external input device 712, such as a keyboard containing alphanumeric keys operated by a human user, or a sensor. A sensor detects conditions in its vicinity and transforms those detections into physical expression compatible with the measurable phenomenon used to represent information in computer system 700. Other external devices coupled to bus 710, used primarily for interacting with humans, include a display device 714, such as a cathode ray tube (CRT) or a liquid crystal display (LCD), or plasma screen or printer for presenting text or images, and a pointing device 716, such as a mouse or a trackball or cursor direction keys, or motion sensor, for controlling a position of a small cursor image presented on the display 714 and issuing commands associated with graphical elements presented on the display 714. In some embodiments, for example, in embodiments in which the computer system 700 performs all functions automatically without human input, one or more of external input device 712, display device 714 and pointing device 716 is omitted.

In the illustrated embodiment, special purpose hardware, such as an application specific integrated circuit (ASIC) 720, is coupled to bus 710. The special purpose hardware is configured to perform operations not performed by processor 702 quickly enough for special purposes. Examples of application specific ICs include graphics accelerator cards for generating images for display 714, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 700 also includes one or more instances of a communications interface 770 coupled to bus 710. Communication interface 770 provides a one-way or two-way communication coupling to a variety of external devices that operate with their own processors, such as printers, scanners, and external disks. In general, the coupling is with a network link 778 that is connected to a local network 780 to which a variety of external devices with their own processors are connected. For example, communication interface 770 may be a parallel port or a serial port or a universal serial bus (USB) port on a personal computer. In some embodiments, communications interface 770 is an integrated services digital network (ISDN) card or a digital subscriber line (DSL) card or a telephone modem that provides an information communication connection to a corresponding type of telephone line. In some embodiments, a communication interface 770 is a cable modem that converts signals on bus 710 into signals for a communication connection over a coaxial cable or into optical signals for a communication connection over a fiber optic cable. As another example, communications interface 770 may be a local area network (LAN) card to provide a data communication connection to a compatible LAN, such as Ethernet. Wireless links may also be implemented. For wireless links, the communications interface 770 sends or receives or both sends and receives electrical, acoustic, or electromagnetic signals, including infrared and optical signals, that carry information streams, such as digital data. For example, in wireless handheld devices, such as mobile telephones like cell phones, the communications interface 770 includes a radio band electromagnetic transmitter and receiver called a radio transceiver. In certain embodiments, the communications interface 770 enables connection to the communication network 105 for estimating population density change over time in an area where dynamic signals are either not available or dense enough to be representative.

The term computer-readable medium is used herein to refer to any medium that participates in providing information to processor 702, including instructions for execution. Such a medium may take many forms, including, but not limited to, non-volatile media, volatile media, and transmission media. Non-volatile media include, for example, optical or magnetic disks, such as storage device 708. Volatile media include, for example, dynamic memory 704. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization, or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 778 typically provides information communication using transmission media through one or more networks to other devices that use or process the information. For example, network link 778 may provide a connection through local network 780 to a host computer 782 or to equipment 784 operated by an Internet Service Provider (ISP). ISP equipment 784 in turn provides data communication services through the public, world-wide packet-switching communication network of networks now commonly referred to as the Internet 790.

A computer called a server host 792 connected to the Internet hosts a process that provides a service in response to information received over the Internet. For example, server host 792 hosts a process that provides information representing video data for presentation at display 714. It is contemplated that the components of system can be deployed in various configurations within other computer systems, e.g., host 782 and server 792.

FIG. 8 illustrates a chip set 800 upon which example embodiment(s) of the invention may be implemented. Chip set 800 is programmed to estimate population density change over time in an area where dynamic signals are either not available or dense enough to be representative as described herein and includes, for instance, the processor and memory components described with respect to FIG. 7 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 800 includes a communication mechanism such as a bus 801 for passing information among the components of the chip set 800. A processor 803 has connectivity to the bus 801 to execute instructions and process information stored in, for example, a memory 805. The processor 803 may include one or more processing cores with each core configured to perform independently. A multi-core processor enables multiprocessing within a single physical package. Examples of a multi-core processor include two, four, eight, or greater numbers of processing cores. Alternatively, or in addition, the processor 803 may include one or more microprocessors configured in tandem via the bus 801 to enable independent execution of instructions, pipelining, and multithreading. The processor 803 may also be accompanied with one or more specialized components to perform certain processing functions and tasks such as one or more digital signal processors (DSP) 807, or one or more application-specific integrated circuits (ASIC) 809. A DSP 807 typically is configured to process real-world signals (e.g., sound) in real time independently of the processor 803. Similarly, an ASIC 809 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 803 and accompanying components have connectivity to the memory 805 via the bus 801. The memory 805 includes both dynamic memory (e.g., RAM, magnetic disk, writable optical disk, etc.) and static memory (e.g., ROM, CD-ROM, etc.) for storing executable instructions that when executed perform the inventive steps described herein to estimate population density change over time in an area where dynamic signals are either not available or dense enough to be representative. The memory 805 also stores the data associated with or generated by the execution of the inventive steps.

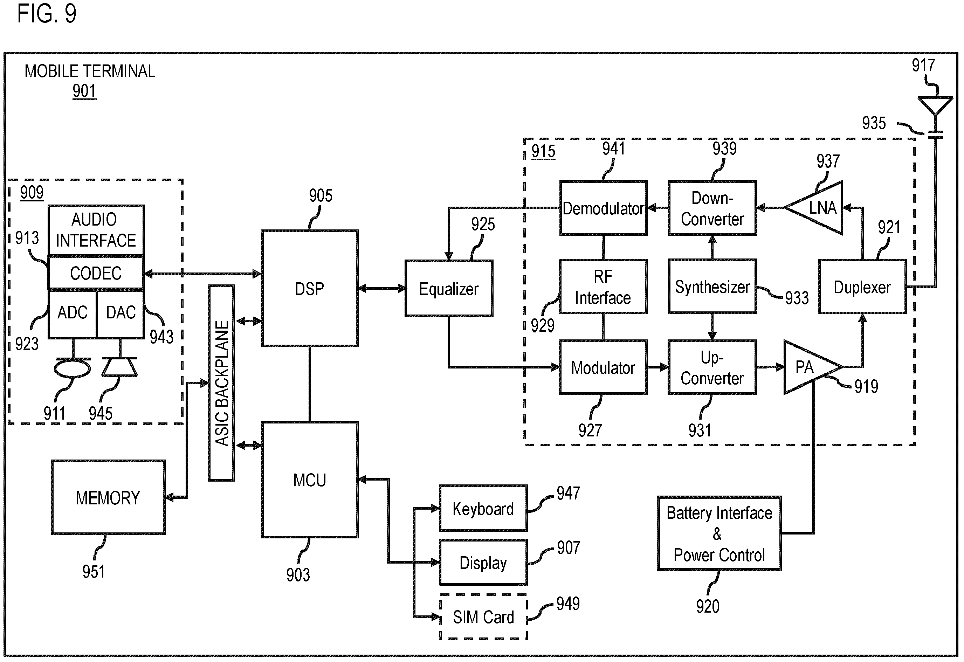

FIG. 9 is a diagram of exemplary components of a mobile terminal 901 (e.g., a UE 101, a vehicle 115, or a component thereof) capable of operating in the system of FIG. 1, according to example embodiment(s). Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 903, a Digital Signal Processor (DSP) 905, and a receiver/transmitter unit including a microphone gain control unit and a speaker gain control unit. A main display unit 907 provides a display to the user in support of various applications and mobile station functions that offer automatic contact matching. An audio function circuitry 909 includes a microphone 911 and microphone amplifier that amplifies the speech signal output from the microphone 911. The amplified speech signal output from the microphone 911 is fed to a coder/decoder (CODEC) 913.

A radio section 915 amplifies power and converts frequency in order to communicate with a base station, which is included in a mobile communication system, via antenna 917. The power amplifier (PA) 919 and the transmitter/modulation circuitry are operationally responsive to the MCU 903, with an output from the PA 919 coupled to the duplexer 921 or circulator or antenna switch, as known in the art. The PA 919 also couples to a battery interface and power control unit 920.

In use, a user of mobile station 901 speaks into the microphone 911 and his or her voice along with any detected background noise is converted into an analog voltage. The analog voltage is then converted into a digital signal through the Analog to Digital Converter (ADC) 923. The control unit 903 routes the digital signal into the DSP 905 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 925 for compensation of any frequency-dependent impairments that occur during transmission though the air such as phase and amplitude distortion. After equalizing the bit stream, the modulator 927 combines the signal with a RF signal generated in the RF interface 929. The modulator 927 generates a sine wave by way of frequency or phase modulation. In order to prepare the signal for transmission, an up-converter 931 combines the sine wave output from the modulator 927 with another sine wave generated by a synthesizer 933 to achieve the desired frequency of transmission. The signal is then sent through a PA 919 to increase the signal to an appropriate power level. In practical systems, the PA 919 acts as a variable gain amplifier whose gain is controlled by the DSP 905 from information received from a network base station. The signal is then filtered within the duplexer 921 and optionally sent to an antenna coupler 935 to match impedances to provide maximum power transfer. Finally, the signal is transmitted via antenna 917 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 901 are received via antenna 917 and immediately amplified by a low noise amplifier (LNA) 937. A down-converter 939 lowers the carrier frequency while the demodulator 941 strips away the RF leaving only a digital bit stream. The signal then goes through the equalizer 925 and is processed by the DSP 905. A Digital to Analog Converter (DAC) 943 converts the signal and the resulting output is transmitted to the user through the speaker 945, all under control of a Main Control Unit (MCU) 903-which can be implemented as a Central Processing Unit (CPU) (not shown).

The MCU 903 receives various signals including input signals from the keyboard 947. The keyboard 947 and/or the MCU 903 in combination with other user input components (e.g., the microphone 911) comprise a user interface circuitry for managing user input. The MCU 903 runs a user interface software to facilitate user control of at least some functions of the mobile station 901 to estimate population density change over time in an area where dynamic signals are either not available or dense enough to be representative. The MCU 903 also delivers a display command and a switch command to the display 907 and to the speech output switching controller, respectively. Further, the MCU 903 exchanges information with the DSP 905 and can access an optionally incorporated SIM card 949 and a memory 951. In addition, the MCU 903 executes various control functions required of the station. The DSP 905 may, depending upon the implementation, perform any of a variety of conventional digital processing functions on the voice signals. Additionally, DSP 905 determines the background noise level of the local environment from the signals detected by microphone 911 and sets the gain of microphone 911 to a level selected to compensate for the natural tendency of the user of the mobile station 901.

The CODEC 913 includes the ADC 923 and DAC 943. The memory 951 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 951 may be, but not limited to, a single memory, CD, DVD, ROM, RAM, EEPROM, optical storage, or any other non-volatile or non-transitory storage medium capable of storing digital data.

An optionally incorporated SIM card 949 carries, for instance, important information, such as the cellular phone number, the carrier supplying service, subscription details, and security information. The SIM card 949 serves primarily to identify the mobile station 901 on a radio network. The card 949 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method comprising:
determining, by one or more processors, one or more map features of a first map space;
identifying, by the one or more processors, two or more map partitions of the first map space based on the identified two or more map partitions (i) having map features that are substantially similar to one another in accordance with one or more unique combinations of the one or more determined map features, and (ii) having respective change functions that are substantially similar to one another, wherein a given change function represents a change of human population as a function of time in a given time-period and in association with a given map partition;
determining, by the one or more processors, an estimated change function based at least on one or more of the respective change functions that are substantially similar to one another and that are associated with the first map space; and
providing or using, by the one or more processors, the estimated change function for at least one partition of a second map space based on the at least one partition of the second map space and at least one of the map partitions of the first map space having one or more map features that are substantially similar to one another.

2. The method of claim 1, further comprising:
determining, by one or more processors, the given change function for each map partition of the first map space based on one or more temporal resolutions,
wherein the estimated change function is further based on the one or more temporal resolutions.

3. The method of claim 1, further comprising:
determining, by one or more processors, dynamic population data for each map partition of the first map space,
wherein the given change function, the change of human population, or a combination thereof is based on the dynamic population data.

4. The method of claim 3, wherein the dynamic population data comprises dynamic signal data, cellular data, global positioning system data, or a combination thereof.

5. The method of claim 3, further comprising:
training, by one or more processors, a classifier model, a regressor model, or a combination thereof for each map partition of the first map space based on the dynamic population data,
wherein the given change function of each map partition is further based on the trained classifier model, the trained regressor model, or a combination thereof.

6. The method of claim 1, wherein the identifying, by the one or more processors, of the two or more map partitions comprises an iterative process, and wherein each iteration comprises a unique partitioning scheme.

7. The method of claim 6, wherein the iterative process seeks to maximize a number of the map features that are substantially similar and a number of the respective change functions that are substantially similar among the identified two or more map partitions.

8. The method of claim 6, wherein the unique partitioning scheme is based on a grid scheme, a building block scheme, a building footprint scheme, or a combination thereof.

9. The method of claim 1, wherein the one or more map features comprise a structural description of an area based on one or more map attributes.

10. The method of claim 1, wherein the one or more map attributes comprise functional classes of streets, building footprints, number of floors, types of points of interest, clusters of points of interest, or a combination thereof.

11. The method of claim 1, wherein the first map space comprises an area with a threshold population density, an urban area, or a combination thereof.

12. An apparatus comprising:
at least one processor; and
at least one memory including computer program code for one or more programs,
the at least one memory and the computer program code configured to, with the at least one processor, cause the apparatus to perform at least the following operations:
determine, by one or more processors, one or more map features of a first map space;
identify, by the one or more processors, two or more map partitions of the first map space based on the identified two or more map partitions (i) having map features that are substantially similar to one another in accordance with one or more unique combinations of the one or more determined map features, and (ii) having respective change functions that are substantially similar to one another, wherein a given change function represents a change of human population as a function of time in a given time-period and in association with a given map partition;
determine, by the one or more processors, an estimated change function based at least on one or more of the respective change functions that are substantially similar to one another and that are associated with the first map space; and
provide or use, by the one or more processors, the estimated change function for at least one partition of a second map space based on the at least one partition of the second map space and at least one of the map partitions of the first map space having one or more map features that are substantially similar to one another.

13. A non-transitory computer-readable storage medium having stored thereon one or more program instructions which, when executed by one or more processors, cause an apparatus to at least perform the following operations:
determining, by one or more processors, one or more map features of a first functional urban area;
identifying, by the one or more processors, two or more map partitions of the first functional urban area based on the identified two or more map partitions (i) having map features that are substantially similar to one another in accordance with one or more unique combinations of the one or more determined map features, and (ii) having respective change functions that are substantially similar to one another, wherein a given change function represents a change of human population as a function of time in a given time-period and in association with a given map partition;
determining, by the one or more processors, an estimated change function based at least on one or more of the respective change functions that are substantially similar to one another and that are associated with the first functional urban area; and
providing or using, by the one or more processors, the estimated change function for at least one partition of a second functional urban area based on the at least one partition of the second functional urban area and at least one of the map partitions of the first functional urban area having one or more map features that are substantially similar to one another.

14. The non-transitory computer-readable storage medium of claim 13, wherein the apparatus is further caused to perform:
determining, by one or more processors, the given change function for each map partition of the first functional urban area based on one or more temporal resolutions,
wherein the estimated change function is further based on the one or more temporal resolutions.

15. The non-transitory computer-readable storage medium of claim 13, wherein the apparatus is further caused to perform:
determining, by one or more processors, dynamic population data for each map partition of the first functional urban area,
wherein the given change function, the change of human population, or a combination thereof is based on the dynamic population data.
